# EUROPEAN PATENT APPLICATION

(11) **EP 4 163 344 A1**
(43) Date of publication of application: **12.04.2023**
(21) Application number: 22169948.1
(22) Date of filing: 26.04.2022
(51) Int. Cl.: C09D 163/00, C08G 59/62, C08K 3/22, C08K 3/30, C08G 59/50, C08G 59/24, C08G 59/64

(54) **COMPOSITION FOR A CHEMICALLY AND MECHANICALLY RESISTANT FLOOR**

(30) Priority: 08.10.2021 NL 2029355
(71) Applicant: Bolidt Maatschappij tot Exploitatie van Kunststoffen en Bouwwerken B.V., 3341 LJ Hendrik-Ido-Ambacht (NL)
(72) Inventor: Bol, Rientz Willem, 3341 LB Hendrik-Ido-Ambacht (NL)
(74) Representative: Arnold & Siedsma

(57) **Abstract**

The present invention relates to a composition for a chemically and mechanically resistant floor in which the floor has a skid resistance and preservation after frequent chemical exposure and use. In addition, the present invention relates to a chemic and mechanically resistant coating for covering a surface comprising the composition and a method for producing a chemically and mechanically resistant floor, for example a cast floor or finishing floor, comprising the composition of the present invention.

## Description

The present invention relates to a composition for a chemically and mechanically resistant floor in which the floor has a skid resistance and preservation after frequent chemical exposure and use. In addition, the present invention relates to a chemic and mechanically resistant coating for covering a surface comprising the composition and a method for producing a chemically and mechanically resistant floor, for example a cast floor or finishing floor, comprising the composition of the present invention.

New buildings, such as hospitals, but also chemical plants and food production sites must meet increasingly stringent safety and resistance requirements imposed by legislation. In most hospitals and health centers, the floor includes a cast floor or finishing floor. Finishing floors or cast floors are increasingly used as a substrate in hospitals and can be formed, for example, by casting a synthetic resin formulated with one or more components or spreading it on a substrate. The use of synthetic resin in floors takes place in various situations because the advantage of synthetic resin is that certain desired mechanical, chemical, electrostatic and / or aesthetic properties can be given to it. Cast floors or finishing floors (e.g. trowel floors) usually consist of combinations of epoxy resins, acrylates or polyurethane resins (PU).

A PU floor forms an elastic surface so that cracks or irregularities under the floor are barely visible. However, over time, it is more likely that these cracks will come to the surface and rupture will occur. A PU floor is less resistant than the epoxy or acrylite floor, for example, the floor is not scratch resistant and can discolor. The PU floor is usually used in homes and offices. In hospitals and industrial halls, an acrylic cast floor is usually used because it dries quickly and can be laid quicker than the PU cast floors or epoxy cast floors and is therefore quickly impact-resistant and ready for use. The epoxy cast floors are harder and more resistant than PU floors, but more expensive and difficult to install and discolor faster.

The choice of polymer, in particular the number of reactive polymer molecules and the size and flexibility of its molecular structure, determines the degree of cross-linking between molecules. The more crosslinks are produced, the stiffer/rigid the polymer structure of the floor will be with the associated mechanical properties. Long chains and low cross-links give a polymer that is stretchable, short chains with many crosslinks produce a hard polymer that will be durable and more wear-resistant. In addition, in the production of cast floors, a wide variety of other chemicals, additives and filling materials are used to control the polymer reactions and create the desired properties, for example, resistance, skid resistance, aesthetics in the final product. For example, surfactants can be used to emulsify the liquid components and deaerate the cell structure and flow flat to avoid surface defects. The finishing floor can also show an even surface, making them particularly attractive to a user. A possible disadvantage of an even floor with a smooth surface concerns the fact that a user of the floor, for example, could slip relatively easily over the smooth surface. To meet this, the floor surface is provided with a certain roughness by mechanical roughening of the surface, for example by sanding, after the finishing floor has been applied, or the coating and / or sprinkling of relatively coarse aggregates of the floor surface. However, this is at the expense of the even appearance of the finishing floor and is also less durable over a longer period of use, which reduces the roughness.

In diagnostic centers and laboratories of hospitals, among others, a lot of work is done with all kinds of chemicals, acids, oils, etc. for the purpose of diagnosing biological samples. During work, it happens that such chemicals are spilled and hit the cast floor, and sometimes remain for some time with the result that the floor surface is affected. In hospital laboratories, for example, a lot of work is done with paraffin wax, which inevitably ends up on the floor. That makes the floor very slippery. We also work with sharp chemicals that can eventually affect the integrity and skid resistance of the floor, resulting in a smoother and less safe floor. Current acrylic-based cast floors in hospitals typically have a coating layer that provides the floor surface with increased skid resistance and provides the floor with increased safety with a reduced risk of slipping. However, as a result of the contamination of the floors and the subsequent (dry) cleaning of the floor surface, this thin coating layer that provides the skid resistance to the floor surface is also reduced over time, resulting in a skid resistance of the floor that decreases over time with the result that the safety of the working environment is compromised, depending on the intensity of cleaning and the use of the floor.

Current floors in hospitals are usually made of a material that makes a good floor based on acrylic specifically for organic acids. This floor system is also used in, for example, the food and dairy industry, but the durability of such floors with regard to mechanical and chemical loads is insufficient. In addition, a cast floor is very critical in the execution with strict requirements with regard to conditions on the construction, subsoil, mixing and processing. Floors can also be coated, but such a coating only produces a thin system/layer that is mechanically more vulnerable and only protects the underlying floor finish until the first damage. As a result, there is a demand for a floor that is completely resistant to both the chemical and mechanical stress in the chemical, healthcare and food industries, i.e. has an increased resistance to acids and chemicals.

In view of the above, there is a need in the art for a floor or floor finish with improved chemically and mechanically resistant properties wherein the floor includes materials that lead to increased chemical resistance to properties such as maintaining skid resistance after frequent chemical and mechanical stress and maintaining resistance to staining under chemical stress. A further goal of the present invention is to provide a chemically and mechanically resistant floor that does not compromise on the aesthetic properties of the floor.

It is a goal of the present invention to, among other things, address the above-mentioned problems and to provide a solution to this end. The goal of the present invention, among other things, according to a first aspect, is achieved by the present invention by means of processes as defined in the claims.

In particular, according to a first aspect according to the present invention, the above objective is achieved, inter alia, by a composition for a chemically and mechanically resistant cast floor comprising
- 20 - 70 wt%, preferably between 30 - 60 wt%, with more preference between 40 - 50 wt% epoxy resin, wherein the epoxy resin has a molecular weight of not more than 700 g/mol,
- an epoxy hardener comprising 20 - 50 wt%, preferably between 30 - 45 wt% benzyl alcohol, 0.5 - 10 wt%, preferably between 2 - 7.5 wt% salicylic acid, and 30 - 70 wt%, preferably 45 - 60 wt% of one or more cyclo-aliphatic polyamide(s) selected from the group consisting of m-phenylenedbis(methylamine), 3,3,5-trimethylhexylenediamine, a polymer of formaldehyde, 1,3 benzenedimethanamine and phenol, a polymer of 3-aminomethyl-3,5,5-trimethylcyclohexylamine, 4,4'-isopropylidene difenol, and 1-chloro-2,3-epoxypropane, a polymer of formaldehyde, 1,3 benzene dimethanamine and phenol, a polymer of 4,4'-(1-methylethylidene)bis phenol, (chloromethyl)oxirane and ethylenediamine,
- 0.5 - 3.5 wt%, preferably 1 - 2 wt% of at least one metal oxide,
- 5 - 30 wt%, preferably 10 - 25 wt% of at least one filler, based on the total weight of the composition,
wherein the floor has a skid resistance of at least 85, preferably at least 100, with more preference at least 130 as determined with an SRT skid resistance meter on a scale of 0-150 in accordance with NEN-EN-13036-4 (2003).

The composition of the present invention uses a specific combination of binders, polymers and fillers, chosen within a certain range because a strongly cross-linking synthetic floor can be obtained with increased shrinkage than the usual floor compounds. The chemical and mechanical resistance and skid resistance of a cast floor comprising the composition of the present invention is much better than that of the current cast floors as used in hospitals that are based on acrylic. A cast floor comprising the composition according to the invention was very resistant to chemical exposure, without this leading to staining or disintegration of the floor surface, this in contrast to the standard acrylic floor as a reference floor. The adhesion of the contamination, more specifically the paraffin wax to the reference floor, is so persistent that the wax can no longer be removed. This was not the case with the cast floor comprising the composition of the present invention, which could be completely cleaned, without significant loss in surface skid resistance or staining due to chemical exposure to the paraffin. Experiments with regard to the skid resistance of the cast floor including the composition according to the invention shows that the new cast floor has an SRT value that is approximately 100% higher than that of the reference floor. But also the skid resistance after cleaning the cast floor soiled with paraffin wax including the composition of the invention is significantly better than that of acrylic and / or PVC floors. The acrylic floors even have such low STR values after cleaning that the safety of the working environment is compromised. The cleanliness of the cast floor comprising the composition of the present invention is significantly better than the acrylic floor.

A floor according to the invention has a relatively rough surface; a skid resistance of at least 85 in accordance with the regulations in the standard NEN-EN-13036-4 (2003). This means that the slip resistance of the floor must be within certain limits. The slip resistance of a surface can be measured in a number of different ways but is tested in the context of this application in accordance with NEN-EN 13036-4, with inspection according to NEN-EN 1504-2. The NEN assumes a required minimum value (a floor can be too slippery). The skid resistance of the floors has been tested with an SRT skid resistance tester. This is a pendulum skid resistance meter. Pendulum Skid Tester measures slip resistance when a rubber slide on a 508 mm pendulum arm comes into contact with a test surface. A drag hand on a scale of 0-150 measures the friction. The test was carried out in accordance with the requirements of standard NEN-EN-13036-4 (2003). The device is placed on the surface to be examined, wherein a glider (foot) with a leather, plastic or rubber sole is pressed onto the surface with a certain force. The dynamic coefficient of friction with the surface is then measured, a dimensionless quantity that can take a value between 0 (very smooth) and 150 (very stiff).

According to a preferred embodiment, the present invention relates to the composition, in which the composition after curing into a cast floor has a degree of cross-linking of at least 95%, preferably at least 98%, preferably 100%. The chemical resistance of a floor comprising the composition according to the invention has a cross-linking degree of at least 95%. If the degree of cross-linking falls below 95%, the chemical resistance of the floor is greatly reduced and chemicals such as acids, fats and oils will be able to more easily penetrate the floor surface, and lead to damage to the floor composition. For example, the floor will show more disintegrations after exposure to chemicals such as acids and vinegar. Stain resistance also decreases and staining increases as a result of exposure to acids and oils and grease, such as paraffin wax.

According to another preferred embodiment, the present invention relates to the composition, wherein the at least one epoxy resin includes bisphenol A (BPA) and/or bisphenol F (BPF) epoxy resin, wherein the epoxy resin comprises a maximum of 50 wt% BPF, preferably a maximum of 30 wt%, with more preference not exceeding 20 wt%, and/or wherein the epoxy resin is between 10 - 20 wtw % BPA includes, preferably 12 -18 wt%, with more preference 14 - 16 wt%, based on the total weight of the epoxy resin in the composition.

According to yet another preferred embodiment, the present invention relates to the composition, wherein the at least one epoxy resin further includes one or more selected from the group consisting of 1 - 5 wt% ethylene oxide, 1 - 5 wt% mono[(C10-C16 alkoxy) methyl] derivatives, and 1 - 5 wt% trimethylolpropanetriglycidylether, based on the total weight of the epoxy resin in the composition.

According to another preferred embodiment, the present invention relates to the composition, wherein said metal oxides include at least one selected from the group consisting of iron oxide, aluminum hydroxide, magnesium hydroxide and magnesium oxide.

According to a preferred embodiment, the present invention relates to the composition, wherein at least one filler is selected from the group consisting of barium sulphate, quartz sand, calcium carbonate, magnesium carbonate, hydromagnesite, sodium tetraborate, zinc borate, disodium tetraborate, calcium silicate, sodium silicate, potassium silicate, kaolin, heavy pair, dolomite, quartz flour, shale flour, talc, aluminium trihydrate, sand, or a mixture thereof. The particle size of the fillers can be chosen for each specific application within wide limits. Particularly suitable average particle sizes range from 10-100 microns, with more preference of 20-90 microns, with even more preference of 30-80 microns, and with the most preference of 40-70 microns.

According to another preferred embodiment, the present invention relates to the composition, wherein said metal oxides include at least one selected from the group consisting of aluminum hydroxide, magnesium hydroxide and magnesium oxide.

According to another preferred embodiment, the present invention relates to the composition, wherein said metal salts include at least one selected from the group consisting of calcium-magnesium carbonate, and hydromagnesite, sodium tetraborate, disodium tetraborate, zinc borate, calcium silicate, sodium silicate and potassium silicate.

According to a second aspect, the present invention relates to a chemically and mechanically resistant floor comprising the composition according to the present invention as described above, in which the floor shows a reduced swelling, discoloration, deposition and degradation after at least 8 hours of exposure to corroded acids and vinegar. in relation to an acrylic casting floor. The floors according to the invention are floors (e.g. cast floors) based on a specific combination of binders, polymers and fillers, chosen within a certain range because a strongly cross-linking synthetic floor can be obtained with increased shrinkage and which is very resistant to chemical exposure, without staining or disintegration of the floor surface compared to the usual used cast floor compositions. The chemical and mechanical resistance and skid resistance of a cast floor comprising the composition of the present invention is much better than that of today's acrylic-based cast floors typically present in hospitals.

According to another preferred embodiment, the present invention relates to the floor, wherein the floor has a skid resistance of at least 85, preferably at least 100, with more preference at least 130 as determined with an SRT skid resistance meter on a scale of 0-150 in accordance with NEN-EN-13036-4 (2003).

According to a third aspect, the present invention relates to a chemically and mechanically resistant coating for coating a surface, including a composition according to the invention. By means of coating, older (or outdated) constructions with an outdated floor surface can also be provided with increased mechanical and chemical resistance, wherein the skid resistance of the surface can be guaranteed after frequent chemical and mechanical exposure and cleaning of the floor surface. This results in improved products/materials that still meet the durability requirements.

According to a preferred embodiment, the present invention relates to the coating, in which the coating of the surface has a layer thickness of 0.01 to 0.2 mm, preferably from 0.03 to 0.15 mm.

According to a fourth aspect, the present invention relates to a method of producing a chemically and mechanically resistant floor, comprising the steps of
(a) providing the composition according to the present invention, by mixing 20 - 70 wt% epoxy resin, wherein the epoxy resin has a molecular weight not exceeding 700 g/mol, an epoxy hardener comprising 20-50 wt% benzyl alcohol, 0.5-10 wt% salicylic acid, and 30-70 wt% of one or more cyclo-aliphatic polyamide(s) selected from the group consisting of m-phenylenbis(methylamine); 3,3,5-trimethylhexylenediamine, a polymer of formaldehyde, 1,3 benzenedimethanamine and phenol, a polymer of 3-aminomethyl-3,5,5-trimethylcyclohexylamine, 4,4'-isopropylidene difenol, and 1-chloro-2,3-epoxypropane, a polymer of formaldehyde, 1,3 benzenedimethanamine and phenol, a polymer of 4,4'-(1-methylethylidene)bis phenol, (chloromethyl)oxirane and ethylenediamine, 0.5-3.5% by weight of at least one metal oxide, and 5-30 wt% of at least one filler, based on the total weight of the composition.
(b) the application of the mixed composition to a surface
(c) hardening under controlled conditions; and
d) optionally, performing an after-treatment.

According to a further aspect, the present invention relates to the use of a composition and/or coating according to the invention for the production of a chemically and mechanically resistant floor.

The present invention will be explained in more detail in the following figures and examples;

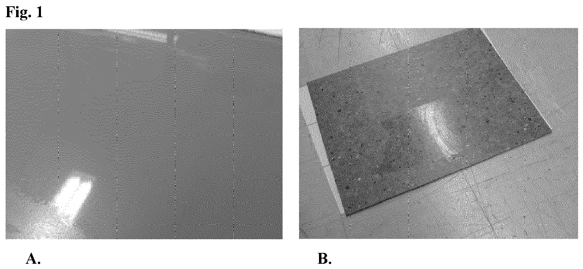

- **Figure 1:**: (A) Shows the surface of floor A according to the present invention which has been smeared with paraffin wax and subsequently cleaned. The surface is completely free of paraffin. (B) Shows the surface of floor B not according to the present invention which has been smeared with paraffin wax and subsequently cleaned. The surface is completely free of paraffin.

### Example 1 - Chemical resistance and skid resistance of floor surface

The chemical resistance and skid resistance of the cast floor composition according to the present invention is tested according to NEN-EN-13036-4 (2003) and ISO 4287 and assessment according to NEN-EN 1504-2. The ease of cleaning the floor surface was also monitored, also in relation to the resistance, skid resistance, slip resistance. A cast floor produced from the floor composition of the present invention (Floor A) (37 wt% BPF (MW <700 g/mol), 22 wt% benzyl alcohol, 5 wt% salicylic acid, and 32 wt% of a polymer of formaldehyde, 1.3 benzenedimethanamine and phenol, and a polymer of 3-aminomethyl-3,5,5-trimethylcyclohexylamine, 4,4'-isopropylidene difenol, and 1-chloro-2,3-epoxypropane, 0.5 wt% iron oxide, and 3.5 wt% barium sulphate, based on the total weight of the composition, has been tested and compared with an acrylic-based control floor as typically present in a hospital (Floor B (state of the art floor). The reference floor consists of approximately 90 wt% filler, 7 wt% acrylic, 0.3 wt% additives and 2.7% harder.

In preparation for the chemical resistance tests, a cement fibre board is provided with the relevant floor system, floor A or floor B. This is aged at 20-22°C and approx. 50-55% relative humidity for at least 1 week. With that, the final hardness of the system has been achieved. The plate is then sawn into small pieces, each of which is tested individually, to prevent the layer of viscous chemicals from running over the plate to an adjacent measuring field during the load and exposure of the floorboards. The pieces are glued to a carrier, in such a way that there are slits of approx. 5mm between the pieces. Then each test piece is loaded with 1 chemical, and depending on the type of load whether or not covered (for example in the case of volatile chemicals). An "open" uncovered test piece simulates a spilled chemical, which can dry/evaporate in the open air. In addition, the concentration of the substance increases, and a more serious damage can occur. The covered test piece simulates a spilled substance creeping under, for example, a table or chair leg. The substance does not dry and the concentration remains the same. However, in the case of (very) volatile substances, the load time is much longer than that with the same substance on an open test piece. After the load time (8 hours) has expired, the plates are viewed, and after rinsing with water, assessed with the eye (color, structure, pitting, flaking etc.) and tested for skid resistance.

The requirements with regard to chemical resistance are that no loss of functionality of the floor finish is observed and little to no staining occurs. In terms of skid resistance, no difference in skid resistance before / after soiling and cleaning should have occurred. The floor surfaces are also tested for cleanability; being able to completely remove the chemicals, in this case in particular with paraffin wax.

### Chemical resistance floor

The following chemicals have been tested on floor surfaces Floor A and Floor B; paraffin, alcoholic eosin, formaldehyde (37%), phosphorus tungsten acid, glacial acetic acid, descaling liquid (contains formic acid), SGA solution, sulfuric acid (3%), potassium permagnate (8.5%), ammonia (25%), xylene, acetone, propanol, Lawson solution, hydrogen peroxide (30%), caustic soda (5M), hydrochloric acid (5M), formic acid, picric acid, hematox (Hematoxylin), lithium carmine, Fe (iron) solution, chlorine, nitric acid (1M).

After 8 hours of exposure, the following properties swelling (Zw), discoloration (Ve), pitting (Pi), flaking (Sc), craquele (Cr), deposit (Aa), staining (VI) and degradation (Deg) were looked at and a score of 0 to 5 was given. Where score of (0) is no change (empty cell in Table 1), (1) is barely visible, 0-1% degradation, (2) is light visible, 1-5% degradation, (3) is clearly visible, structure intact, 5-10% degradation, (4) is clearly visible, structure affected, 10-50% degradation, (5) is extremely visible, structure completely affected, 50-100% degradation. Table 1 gives an overview of the observed properties per floor after exposure to the chemicals.

**Table 1. Scores regarding the effect of chemicals on floor properties**

| **Chemicals** | **Floor** | **Zw** | **Ve** | **Pi** | **Sc** | **Cr** | **Aa** | **Vl** | **Deg** |
|---|---|---|---|---|---|---|---|---|---|
| Paraffin | A | | | | | | 1 | | |
| | B | | | | | | 4 | | |
| Acetone | A | | | | | | | | |
| | B | | | | | | | | |
| Alcoholic eosin | A | | 3 | | | | | 2 | |
| | B | | | | | | | | |
| Propanol | A | | | | | | | | |
| | B | | | | | | | | |
| formaldehyde | A | | | | | | | | |
| | B | | | | | | | | |
| Lawson | A | | | | | | | 4 | |
| | B | | | | | | | 4 | |
| Phosphorus tungstic acid | A | | | | | | | | |
| | B | | | | | | | | |
| Hydrogen peroxide | A | 2 | 3 | | | | | | |
| | B | 4 | 4 | | | | | | |
| Glacial acetic acid | A | 1 | 1 | | | | | | |
| | B | 3 | 3 | | | | | | |
| Sodium hydroxide solution | A | | | | | | | | |
| | B | | | | | | | | |
| Descaling liquid | A | 1 | | | | 1 | | | |
| | B | 1 | 1 | | | 1 | | | |
| Sulfuric acid | A | | | | | | | | |
| | B | | 3 | | | | | | |
| Picric acid | A | | 2 | | | | | | 1 |
| | B | | 3 | | | | | | 2 |
| SGA Solution | A | 1 | | | | | | | |
| | B | 1 | 3 | | | | | 3 | |
| Hematoxyline | A | | | | | | | 2 | |
| | B | | 1 | | | | | 2 | |
| Hydrochloric acid | A | | | | | 1 | | | |
| | B | | | 1 | | 1 | | | |
| Lithium -carmine | A | | | | | | | | |
| | B | | | | | | | | |
| Potassium permanganate | A | | | | | | | 3 | |
| | B | | | | | | | 4 | |
| iron solution | A | 1 | | | | | | | |
| | B | | | | | | | | |
| Ammonia | A | | | | | | | | |
| | B | | | | | | | 1 | |
| Chlorine | A | | | | | | | | |
| | B | | | | | | | | |
| Xylene | A | | | | | | | | |
| | B | | | | | | 2 | | |
| nitric acid | A | | 1 | | | | | | |
| | B | | 3 | | | 1 | | | |

The floor A according to the invention was generally more resistant to chemicals, mainly in corrosive acids and vinegar the floor performed better than compared to the reference floor B. Floor A showed less swelling, deposits and degradation. Also in terms of discoloration due to exposure to various chemicals, such as hydrogen peroxide, glacial acetic acid and nitric acid led to a reduced discoloration and staining in the cast floor composition according to the present invention.

### Skid resistance and cleanability

The skid resistance of the floors has been tested with an SRT skid resistance tester. This is a pendulum skid resistance meter. Pendulum Skid Tester measures slip resistance when a rubber slide on a 508 mm pendulum arm comes into contact with a test surface. A drag hand on a scale of 0-150 measures the friction. The test was carried out in accordance with the requirements of standard NEN-EN-13036-4 (2003). In short, the following steps are followed; the device is placed on the surface to be examined, with a glider (foot) with a leather, plastic or rubber sole being pressed onto the surface with a certain force. Then the dynamic coefficient of friction with the surface is measured, performing a first meeting of the unpolluted surface. Then the floor surface is soiled with the chemicals. After loading time and removal of the soil, the skid resistance of the floor is measured again. The samples are stored for 1 day at approx. 20-22°C and 50-55% relative humidity.

The cleanability is considered with regard to contamination with paraffin wax. This contamination causes a decrease in skid resistance and dangerous situations for the employees of the hospital. Each floor panel is rubbed with the paraffin wax, with the wax spreading over the surface of the floor sample. The samples are stored for 1 day at approx. 20-22°C and 50-55% relative humidity.

The skid resistance is measured before contamination with paraffin wax, after contamination and after cleaning. According to the invention (floor A), the floor turned out to have by far the best properties. The measured values are shown in Table 2. The plates are completely cleaned (with BOLIDT SUPER STRIPPER). Floor A according to the present invention became completely clean. On floor B, a thin layer of paraffin wax was left behind that could not be removed. See also Figures 1 A and B. Apart from the fact that, according to the invention, floor A had a much higher skid resistance than floor B, floor A retains sufficient of its skid resistance even after cleaning the surface to completely remove the paraffin wax, in contrast to the reference floor B. Values below 85 (measured with SRT) are considered undesirable, as the floor surface can be perceived as slippery and can therefore lead to dangerous situations on the work floor.

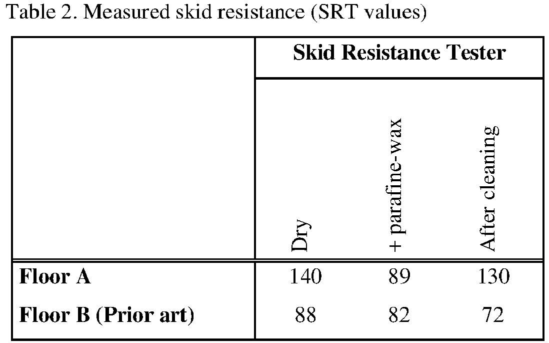

## Claims

1. Composition for a chemically and mechanically resistant cast floor comprising
- 20 - 70 wt% epoxy resin, wherein the epoxy resin has a molecular weight of at most 700 g/mol,
- an epoxy hardener comprising 20-50 wt% benzyl alcohol, 0.5-10 wt% salicylic acid, and 30-70 wt% of one or more cyclo-aliphatic polyamide(s) selected from the group consisting of m-phenylenebis(methylamine), 3,3,5-trimethylhexylenediamine, a polymer of formaldehyde, 1,3 benzenedimethanamine and phenol, a polymer of 3-aminomethyl-3,5,5-trimethylcyclohexylamine, 4,4'-isopropylidene difenol, and 1-chloro-2,3-epoxypropane, a polymer of formaldehyde, 1,3 benzenedimethanamine and phenol, a polymer of 4,4'-(1-methylethylidene)bis phenol, (chloromethyl) oxirane and ethylenediamine,
- 0.5 - 3.5 % by weight of at least one metal oxide,
- 5 - 30 wt% of at least one filler, based on the total weight of the composition,
wherein the floor has a skid resistance of at least 85, preferably at least 100, with more preference at least 130 as determined with an SRT skid resistance meter on a scale of 0-150 in accordance with NEN-EN-13036-4 (2003).

2. Composition according to claim 1, in which the composition after curing to a cast floor has a cross-linking degree of at least 95%, preferably at least 98%, preferably 100%.

3. Composition according to claim 1 or 2, wherein the at least one epoxy resin includes bisphenol A (BPA) and/or bisphenol F (BPF) epoxy resin, wherein the epoxy resin includes at most 50 wt% BPF, preferably at most 30 wt%, with more preference at most 20 wt%, and/or wherein the epoxy resin is between 10 - 20 wt% BPA comprises, preferably 12 -18 wt%, with more preference 14 - 16 wt%, based on the total weight of the epoxy resin in the composition.

4. Composition according to any one of the preceding claims, wherein the at least one epoxy resin further includes one or more selected from the group consisting of 1-5 wt% ethylene oxide, 1-5 wt% mono[(C10-C16 alkoxy)methyl]derivatives, and 1-5 wt% trimethylolpropanetriglycidyl ether, based on the total weight of the epoxy resin in the composition.

5. Composition according to any one of the preceding claims, wherein said metal oxides include at least one selected from the group consisting of iron oxide, aluminum hydroxide, magnesium hydroxide and magnesium oxide.

6. Composition according to any one of the preceding claims, wherein at least one filler is selected from the group consisting of barium sulphate, quartz sand, calcium carbonate, magnesium carbonate, hydromagnesite, sodium tetraborate, zinc borate, disodium tetraborate, calcium silicate, sodium silicate and potassium silicate.

7. Composition according to any one of the preceding claims, wherein said composition further comprises at least one deaerator, preferably a silicone-free deaerator.

8. Chemically and mechanically resistant floor comprising the composition according to any one of claims 1 to 7, wherein the floor shows reduced swelling, discoloration, deposits and degradation after at least 8 hours of exposure to corroded acids and vinegar compared to an acrylic cast floor.

9. Chemically and mechanically resistant coating for coating a surface, comprising a composition according to any one of claims 1 to 8.

10. Chemically and mechanically resistant coating according to claim 9, wherein the coating of the surface has a layer thickness of 0.01 to 0.2 mm, preferably from 0.03 to 0.15 mm.

11. Method of producing a chemically and mechanically resistant floor, comprising the steps of
(a) the composition according to one of claims 1 to 8, by mixing 20 - 70 % by weight of epoxy resin, wherein the epoxy resin has a molecular weight at most 700 g/mol, an epoxy hardener comprising 20-50 wt% benzyl alcohol, 0.5-10 wt% salicylic acid, and 30-70 wt% of one or more cyclo-aliphatic polyamide(s) selected from the group consisting of m-phenylenbis(methylamine); 3,3,5-trimethylhexylenediamine, a polymer of formaldehyde, 1,3 benzenedimethanamine and phenol, a polymer of 3-aminomethyl-3,5,5-trimethylcyclohexylamine, 4,4'-isopropylidene difenol, and 1-chloro-2,3-epoxypropane, a polymer of formaldehyde, 1,3 benzenedimethanamine and phenol, a polymer of 4,4'-(1-methylethylidene)bis phenol, (chloromethyl)oxirane and ethylenediamine, 0.5-3.5% by weight of at least one metal oxide, and 5-30 wt% of at least one filler, based on the total weight of the composition,
(b) the application of the mixed composition to a surface
(c) hardening under controlled conditions; and
d) optionally, performing an after-treatment.

12. Use of a composition and/or coating according to any one of claims 1 to 10 for the production of a chemically and mechanically resistant floor.
